(19) Europäisches Patentamt

European Patent Office

Office européen des brevets

(11) Publication number: **0 318 326 B1**

## EUROPEAN PATENT SPECIFICATION

(45) Date of publication of patent specification: 25.08.93  (51) Int. Cl.⁵: **A23D 9/00**, C11B 3/00, A23C 15/14

(21) Application number: **88311223.7**

(22) Date of filing: **25.11.88**

The file contains technical information submitted after the application was filed and not included in this specification

(54) Method of removing sterols from edible fats and/or oils and/or fats and/or oils from which sterols have been removed.

(30) Priority: **27.11.87 NZ 222728**

(43) Date of publication of application:
**31.05.89 Bulletin 89/22**

(45) Publication of the grant of the patent:
**25.08.93 Bulletin 93/34**

(84) Designated Contracting States:
**AT BE CH DE ES FR GB GR IT LI LU NL SE**

(56) References cited:
EP-A- 0 174 848
EP-A- 0 256 911
US-A- 3 450 541

FETTE, SEIFEN, AUSTRICHMITTEL, vol. 76, no. 10, 1974, pages 433-435, Hamburg, DE; E. HOMBERG: "Veränderung der Sterine durch industrielle Verarbeitungsprozesse von Fetten und Ölen I: Einfluss der Raffinationsbedingungen auf den Steringehalt und die Sterinzusammensetzung"

(73) Proprietor: **NEW ZEALAND DAIRY RESEARCH INSTITUTE**
**Dairy Farm Road Fitzherbert West**
**Palmerston North(NZ)**

(72) Inventor: **Keen, Alan Robert New Zealand Dairy Research Inst.**
**Dairy Farm Road**
**Fitzherbert Palmerston North(NZ)**

(74) Representative: **Brown, John David et al**
**FORRESTER & BOEHMERT Franz-Joseph-Strasse 38**
**D-80801 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

EP 0 318 326 B1

## Description

This invention relates to methods of removing sterols from edible fats and/or oils and/or fats and oils from which such sterols have been removed, and in particular for the removal of cholesterol from milkfat.

It is an object of the present invention to provide a method of removing sterols from fats and/or oils and/or fats and oils from which such sterols have been removed which will at least provide the public with a useful choice.

Accordingly, in one aspect of the invention consists in a method of removing sterols from edible fat and/or oil said method comprising the steps of maintaining the fat and/or oil in a liquid condition, treating the liquid fat and/or oil with an adsorbent or absorbent selected from

(a) a carbon impregnated with a metal salt including zinc sulphate, zinc nitrate, zinc chloride, calcium chloride, manganese nitrate, manganese sulphate, manganese chloride

(b) a carbon impregnated with water soluble or alcohol soluble organic compounds selected from amides and nucleotides;

(c) porous glass, ceramic or plastics

(d) other adsorbent materials including aluminas, silicas, zeolites and magnesias which have/ been impregnated with mineral salts and/or selected amides and nucleotides;

the fat and/or oil being treated with the selected adsorbent or absorbent until more than about 50% of sterols in the fat or oil is extracted therefrom.

In the present invention it has been found that a very large amount of absorbent or adsorbent is required to achieve successful removal of cholesterol and its derivatives such as cholesterol oxides. In fact, the Freundlich constant K is about 63 for the absorption or adsorption of cholesterol from milk fat. This is to be contrasted with a value of about $K = 7$ for decolorization of fats and oils using carbon. Generally, the present invention in a preferred form involves maintaining the edible oil or fat preferably milkfat in a liquid state and thereafter contacting it with an absorbent or preferably an adsorbent to remove the sterol, preferably cholesterol or its derivatives. Preferably the adsorbent is selected from the group consisting of, carbon adsorbents impregnated with metal salt or organic compounds, porous glass including chemically bonded and impregnated glass, and impregnated aluminas.

In order to remove essentially all of the cholesterol from milkfat, it is necessary to use a very large quantity of adsorbent, or to give a very large exposure of the fat to the adsorbent or absorbent. For example, in a preferred embodiment of the invention to effect a greater than 90% reduction in cholesterol from milkfat, the ratio of oil to adsorbent in a batch process is at least 5:1 and in a continuous process is typically 8:1 depending upon the absorbent used. In conventional colour removal from fats and oils, the ratio is typically 20:1 to 100:1 and for milkfat is typically 176:1.

In a continuous process the present invention can take advantage of either a fixed column or a pulsed column of adsorbent to achieve a reduction or elimination of the sterol from the fat or oil.

In a further aspect the invention consists in a product from which sterols have been removed by a method according to the preceding method.

In one of the preferred forms of the invention it is envisaged that an edible oil and/or fat, for example fats and oils of vegetable and/or animal origin (including fish fats and/or oils), is treated with an adsorbent or absorbent in a batch or in a continuous process. This preferred method is described in relation to the removal of cholesterol from anhydrous milkfat (AMF).

To put the method into operation, the AMF is maintained at a temperature which maintains the AMF liquid and preferably which reduces the viscosity of the AMF to a value which facilitates adsorption or absorption of the sterols on to or into the active adsorbents or absorbents. Alternatively or in addition one or more compatible solvents are used to reduce the viscosity of the fats and/or oils used. As a further or additional alternative fractionation, may be used to separate a liquid fat fraction from a solid fat fraction. Preferably the treating material comprises an adsorbent which include carbons, earths and clays either pulverised or granulated, or porus glass of aluminas. Most preferably the adsorbent or absorbent is in particulate condition.

The steps may be effected as a substantially continuous process, and preferably the steps include the step of passing said fat and/or oil through a continuous column having an upstream end near the point of entry of fat and/or oil thereto and a downstream end near the exit end of said column. Preferred treating materials include carbon impregnated with metal salts, urea, Guanosine monophosphate or Inosine monophosphate or other absorbent materials impregnated with Guanosine monophosphate or Inosine monophosphate.

During repeated or continuous contact with the adsorbent some oils and fats may lose their characteristic flavour, colour and oxidative stability. After deodorization for example by using equipment common to the vegetable oil industry, undesirable flavours are removed from the treated oil or fat. Both desired colour, flavour and oxidative stability may be added back using natural nature identical or artificial components.

The process may be carried out either as a continuous or batch process. As an example of the continuous method, a hot milkfat such as anhydrous milkfat is maintained at a temperature above its melting point (e.g. 40°C) and preferably between 70-90°C and is slowly percolated through a column of granulated (12 x 40 mesh) active carbon (type APC, Calgon Corporation, Pittsburgh, PA, U.S.A.) (APC carbon). The initial fractions obtained were substantially cholesterol free.

In a procedure, a pulsed bed of APC granulated carbon (10 x 40 mesh) is used and anhydrous milkfat (AMF) at an elevated temperature (e.g. 80°C) is pumped at a controlled rate up through the carbon column. The carbon column is pulsed (i.e. a fresh portion of granulated carbon is added to the top of the column and an equivalent portion of spent carbon removed from the bottom of the column) at intervals selected to maintain the desired level of cholesterol (zero or relatively low) in the treated AMF.

The treated AMF can then be deodourised in a vegetable oil deodouriser and stabilised against oxidative deterioration by the addition of a suitable antioxidant, preferably natural additives such as Eastmans (USA) Tenox GT-1 or Vitamin E 4-50. Yellow Colour ($\beta$- Carotene) can be restored by the addition of $\beta$-Carotene (Roche Switzerland). Suitable flavour concentrates can also be added.

The following experiments set forth examples of cholesterol removal in milkfat using both batch and continuous processing. It should be noted that deodorisation and decolourisation are achieved at a very early stage in the processing whereas removal of the sterols requires a very large amount of processing.

Comparative Experiment 1. Active carbon treatment of milkfat (batch process) active carbon Calgon Corp. Type APC preferably also pulverised.

| No. of extractions with 5% w/w active absorbent | Concentration of Cholesterol $\mu$g/g | Colour ($\beta$-carotene) $\mu$g/g | Total Percentage of Active Carbon Used |
|---|---|---|---|
| 0 | 2620 | 7.5 moderately yellow | 0 |
| 1 | 1560 | 0.1 colourless (water white) | 5 |
| 2 | 890 | | 10 |
| 3 | 460 | | 15 |
| 4 | 250 | | 20 |
| The time of each extraction was typically 45 minutes. | | | |

Comparative Experiment 2. Active earth treatment of milkfat (batch process), active earth Misuzawa Chemical Co. Japan, type Galleon

| No. of extractions with 5% w/w active absorbent | Concentration of Cholesterol $\mu$g/g | Colour ($\beta$-carotene) $\mu$g/g | Total Percentage of Active Earth Used |
|---|---|---|---|
| 0 | 2620 | 7.5 moderately yellow | 0 |
| 1 | 2420 | 0:1 colourless (water white) | 5 |
| 2 | 2350 | | 10 |
| 3 | 2140 | | 15 |
| 4 | 1900 | | 20 |

Other examples of active earths are Florex LVM 10/30 or 16/60 Foridin Co, USA, Fuller's Earth & Tonsil (West Germany)

Comparative Experiment 3. Active earth plus carbon (10:1: w/w) treatment of milk fat batch process, Active Earth, Galleon carbon type APC as above

| No. of extractions with 5% w/w active absorbent | Concentration of Cholesterol μg/g | Colour (β-carotene) μg/g | Total Percentage of Active Earth PLUS Carbon Used |
|---|---|---|---|
| 0 | 2620 | 7.5 moderately yellow | 0 |
| 1 | 2340 | 0.1 colourless (water white) | 5 |
| 2 | 2090 | | 10 |
| 3 | 1840 | | 15 |
| 4 | 1040 | | 20 |

Comparative Experiment 4. Active carbon treatment of fish oil (batch process) carbon type APC as above

| No. of extractions with 5% w/w active absorbent | Concentration of Cholesterol μg/g | Colour (β-carotene) μg/g | Total Percentage of Active Carbon Used |
|---|---|---|---|
| 0 | 2310 | | 0 |
| 1 | 1550 | | 5 |
| 2 | 1300 | | 10 |
| 3 | 820 | | 15 |
| 4 | 430 | | 20 |

Comparative Experiment 5. Continuous carbon column treatment of milkfat carbon type APC as above

| Amount of carbon used | Quantity of milkfat decolourized | Quantity of milkfat decholesterolised |
|---|---|---|
| 1 kg | 176 kg | 8 kg |

Referring to Experiment 5, 176 kg of milkfat was completely decolourised in a continuous column. However, only 8 kg of the milkfat was decholesterolised showing the larger ratios necessary to decholesterolise.

In addition to the foregoing experiments, anhydrous milkfat (2375 μg cholesterol/g milkfat) was passed through an APC carbon column (490 mm x 20 mm ID, 72.7g) at 70°C and the cholesterol level was reduced to 29.3 μg/g milkfat. Likewise in a similar column when anhydrous milkfat was percolated through at 70°C, the natural levels of cholesterol oxides[2] present (5 cholesten-3β-OL-7-one and cholesterol 5α, 6α epoxide) were completely eliminated in the first 5ml eluate collected.

[2] In addition to cholesterol, cholesterol oxides have been implicated as potent causative agents for atherosclerosis and have also been implicated as potential carcinogens. Accordingly, the removal of these oxides is extremely important.

4

It has also been found that when carbon (Carbon APC 12 x 40) was impregnated with a selection of metal salts of differing cations and anions the capacity of the carbon for cholesterol adsorption from anhydrous milkfat was increased, in some cases very significantly. This is illustrated in the following table based on batch processing and single extraction using 5% w/w active carbon.

TABLE

| Metal Salt used to Impregnate APC Carbon | Concentration of Cholesterol ($\mu$g/g milkfat) in the 28th 5ml fraction of column |
|---|---|
| APC Carbon Control (mean of 3 exps) | 534.0 |
| $ZnSO_4$ | 330.6 |
| $Zn(NO_3)_2$ | 317.3 |
| $ZnCl_2$ | 97.4 |
| APC Carbon control | 500.5 |
| $CaCl_2$ | 294.0 |
| APC Carbon control | 674.0 |
| $Mn(NO_3)_2$ | 529.0 |
| $MnSO_4$ | 330.6 |
| $MnCl_2$ | 314.9 |

Also APC carbon was impregnated with a number of water soluble or alcohol soluble organic compounds. It was found of these organic compounds;
(a) amides, typified by urea, and
(b) nucleotides such as GMP (Guanysine monophosphate) or IMP (Inosine monophosphate)
were found to provide the greatest degree of enhancement to the process of the invention. In particularly, urea and IMP markedly improved the ability of carbon to remove cholesterol from milkfat.

| Organic compound used to Impregnate Carbon | Concentration of Cholesterol ($\mu$g/g milkfat) in the 28th 5ml fraction off column. |
|---|---|
| Control carbon (mean of 2 exps) | 288.5 |
| Urea* | 59.0 |
| IMP+ | 258.3 |

*Granulated APC carbon was impregnated by immersion in a 10% (w/w) aqueous solution of the metal salt at 80°C for 2h. The carbon was removed by filtration and dried at 105°C for 24h before use.

```
        Granulated Carbon (APC 12 x 40)

    *    10% aqueous solution of urea (w/w) used to impregnate

        carbon.

    +    5% aqueous solution of IMP w/w used to impregnate

        carbon.
```

Similarly if GMP is used then a 5% aqueous solution of GMP w/w is used.

Thus selected organics can increase the efficiency of adsorbents to remove cholesterol (and cholesterol oxides) from anhydrous milkfat.

It should be noted that Digitonin and Tomatine, two compounds known to form insoluble adducts with cholesterol in solution and used to remove cholesterol from solution when placed on an inert support (Celite 545) (U.S. Patent No. 3,450,541), did not in the circumstances of the experiments made, improve the performance of carbon.

When anhydrous milkfat (2375 $\mu$g cholesterol/g milkfat) was passed through a column packed with controlled porous glass (400 mm x 10 mm ID, 40g) at 70°C the cholesterol concentration was reduced to a mean of 370.3 $\mu$g/g milkfat in the first 2ml of eluate. In the ninth 2ml fraction the cholesterol level was still reduced to a mean of 1650.2 $\mu$g/g milkfat. With the use of controlled pore glass it was observed that the colour and some of the flavour compounds were only partially removed by the adsorbent.

Porous Glass (Corning Vycor 30 x 60 mesh)

Unlike carbon, under the conditions employed, metal salt impregnation[3] of porous glass evidenced litte affect on the capacity of such glass to enhance cholesterol adsorption from milkfat. However, Zinc Chloride did show a slight enhancement as was observed for carbon above. This is shown in the following table

| Metal Salt used to Impregnate Porous Glass | Concentration of Cholesterol $\mu$g/g Milkfat) in the ninth 2ml fraction from the column |
|---|---|
| Porous glass control (mean of 2 exps) | 1650.2 |
| CaCl$_2$ | 1734.5 |
| MnCl$_2$ | 1622.1 |
| ZnCl$_2$ | 1597.6 |

Since the surface area for APC carbon (1525 m$^2$/g) is about 6.5 times greater than that of the porous glass investigated (230 m$^2$/g) it is contemplated that a more active porous glass may result by enhancing the capacity of the glass using different conditions or using solutions of the metal salts used to impregnate the glass which are correspondingly more dilute than those used to impregnate the carbon. Additionally or alternatively a greater ratio of adsorbent/fat and/or a greater time of treatment can be used.

The invention also envisages the use of adsorbents selected from porous glass, ceramic, plastics or other adsorbent materials including chemical silicas, zeolites and magnesias including chemicals bonded groups.

Four porous glasses (Pierce, USA) each with different chemically bonded groups were investigated (column ht of bonded glass 362 mm, ID 10 mm, weight of bonded glass 10.2g). Cholesterol values of 1652.3 ug, 767.5 ug, 935.5 ug and 1003.0 $\mu$g per g of milkfat (original value 2375 $\mu$g cholesterol/g milkfat) were obtained in the first 2 mls of eluate obtained, respectively, from columns of control pore glass with the bonded groups, Alkylamine, Aminoaryl, Carboxyl and Glycophase. These results indicate that suitable columns of adsorbent with bonded groups would be able to substantially eliminate cholesterol (and cholesterol oxides) from milkfat. (A control glass of the same porous specification was not available for comparison purposes).

---

[3] Porous glass impregnated under exactly the same conditions as for carbon with the same strength metal salt solutions.

6

Trials have been made with various aluminas as follows.

EXPERIMENTAL

Alumina (5 g) and AMF (100 g) was stored in a baffled 250 ml flat bottomed flask with a magnetic stirrer for 24 hrs while maintained at 72°C. The AMF ws filtered under vacuum using a sintered glass funnel and the filtered sample analyzed for cholesterol.

RESULTS

| Absorbent Type | Cholesterol conc. in filtered AMF (mg/g) | % Removal of cholesterol compared to carbon |
|---|---|---|
| None - Control AMF | 2.45 | |
| APC Carbon (Pulverized) | 1.43 | 100% |
| Alumina 28-48 A-2 | 1.83 | 60.8% |
| Alumina B Act I | 1.91 | 52.9% |
| Alumina BX | 1.97 | 47.1% |
| Alumina 28-48 | 2.04 | 40.2% |
| Alumina 48-100 | 2.11 | 33.3% |
| Alumina 14-28 | 2.10 | 34.3% |
| Alumina F-20 | 2.10 | 34.3% |
| Alumina AX | 2.02 | 42.2% |
| Alumina Desisphere 1/8" | 2.04 | 40.2% |

In a further experiment using the same method as the Alumina experiments the following results were obtained

RESULTS

| Absorbent Type | | Cholesterol conc. in filtered AMF (mg/g) |
|---|---|---|
| None-Control AMF | | 2.52 |
| Spherosil(Glass) | | 2.31 |
| Zeolite 5A | | 2.45 |
| Porous Plastic Gas chrome 254 | | 2.27 |
| Adsorbent Magnesia | | 2.33 |
| Florisil | 60/100 | 2.25 |
| | 60/100A | 2.32 |

PRODUCTION OF DECHOLESTEROLISED MILKFAT

The following procedures describe a small production method for producing decholesterolised milk fat using a fixed and pulsed carbon column.

Fixed Column Mode

Anhydrous milkfat (2600 μg cholesterol/g milkfat) at 40°C was pumped at 80m1/min through a column of carbon (APC 12 x 40 mesh) 13.7 metres long by 5.1 cm internal diameter held at 70°C. This column contained 9.1 kg of granulated APC carbon. Approximately 74 kg of decholesterolised AMF (Cholesterol content less than 10 μg/g milkfat) was collected before cholesterol breakthrough occurred from the column.

7

## Pulsed Column Mode

When breakthrough of cholesterol occurred from the column in 1 above 0.91 kg of fresh APC carbon was added to the end of the carbon column in the form of an add-on column 1.37m x 5.1cm ID and 0.91 kg of spent carbon was removed from the column as a detachable column 1.37 m x 5.1 cm ID. This procedure was repeated each time breakthrough of cholesterol occurred at the end of the new add-on column. This process is repeated until the desired amount of cholesterol free (less than 10 $\mu$g cholesterol/g milkfat) or low cholesterol milkfat is prepared.

The ratio of adsorbent or absorbent to fat and/or oil is preferably greater than 20% w/w or greater than 1% w/w active carbon to fat and/or oil for a batch and for a continuous process respectively.

Micro particulate carbon present in the milkfat from experiments performed in both the fixed column mode and pulsed column mode was removed by filtration of the liquid milkfat.

## DEODORIZATION OF MILKFAT

Before decholesterolised milkfat obtained from the carbon column can be utilised for the manufacture of most products it may be deodorized to a bland product. A small deodorizer with a total charge capacity of 15kg milkfat was utilised. The contents of the deodorizer were heated with an electric element to 210°C and a vacuum maintained at 8milli bar on the pump guage. Steam was passed through the 15kg milkfat charge at 120 grams/h and after 4 h deodorization was complete. The deodorised milkfat was cooled to 40°C, packed off with added antioxidant (Eastman Tenox GT-1) and stored at -5°C until required for the manufacture of cholesterol free or low cholesterol products.

## MANUFACTURE OF PRODUCTS WITH DECHOLESTEROLISED MILKFAT

### Manufacture of Cheese:

Melted decholesterolised anhydrous milkfat (DCAMF) with added colour ($\beta$-carotene) and pasteurised skim milk together in a suitable ratio were homogenised at selected pressures and temperature to provide a cream. The cream was blended into a further quantity of pasteurised skim milk to provide whole milk with a standardised milkfat content. Cheese starter was added to the milk which was then set with rennet. The coagulum was cut into cubes and stirred continuously and the whey expelled. A portion of the whey may be removed (10-70%) and replaced with water (10-70%) so as to control the pH of the finished cheese. After the appropriate acidity increase, the whey was removed from the curd and salt applied for the final moisture control. After salting and further whey drainage the salted curd was pressed into blocks. After a suitable pressing period the cheese was wrapped in a nonpermeable barrier material for curing at a temperature in the range of 5-12°C. (Actual curing time was dependent on the desired level of flavour development required). Cheeses were obtained with excellent flavour and texture and with very low cholesterol contents.

### Processed Cheese

#### Method (a):

Cheese manufactured in 1. above was added to a processed cheese kettle along with suitable emulsifying salts. After heating and mixing the molten processed cheese was packed in suitable containers and cooled.

#### Method (b):

Decholesterolised anhydrous milkfat, skim milk cheese, emulsifying salts, colour, flavour and salt were added to a processed cheese kettle. After heating and mixing the molten processed cheese was packed in suitable containers and cooled. Both types of processed cheese had excellent flavour and texture and very low cholesterol contents.

### UHT - Treated Cream or Whole Milk

Decholesterolised anhydrous milkfat (DCAMF) was melted and added to a predetermined amount of emulsifiers, stabilisers, skim milk, colour ($\beta$-carotene) and flavours. The appropriate amount of DCAMF was selected so as to obtain cream or whole milk with the desired milkfat content. The mixture of ingredients was heated to a selected temperature and homogenised at selected pressures to produce a stable emulsion. The resultant cream or whole milk was subjected to UHT treatment then aseptically packed. The cream and whole milk was kept refrigerated until required. The UHT products obtained had excellent flavour and physical properties in which the cholesterol content was extremely low.

Butter

Method (a):

Decholesterolised milkfat is melted at minimum temperatures then maintained at 40°C in a suitable vat. The aqueous phase consisting of water, reconstituted skim milk solids, emulsifiers, stabilisers, colour ($\beta$-carotene), flavour and salt (if required) was pasteurized and added to the vat. The contents of the vat were agitated and passed through a scrapped surface heat exchanger and pin worker and the butter thus produced was packaged and cooled. A butter with excellent flavour and containing an extremely low cholesterol content was obtained.

Method (b):

In another variation of this procedure, the melted decholesterolised anhydrous milkfat was added to a calculated quantity of pasteurised fresh cream. An appropriate amount of colour ($\beta$-carotene) was added and the mixture processed as in (a). A butter with natural flavour and reduced cholesterol content was produced.

Ice Cream

A suitable quantity of melted decholesterolised anhydrous milkfat was added to a formulation of reconstituted skim milk powder, sugar, emulsifiers, stabilisers, suitable flavours and corresponding colours which had been pasteurised. The mixture was passed through an ice cream churn and the ice cream produced packed and maintained suitably frozen. Ice cream with excellent flavour and with markedly reduced cholesterol content was obtained.

Shortbread Cookies

Butter from 4. above was blended with sugar, water, flour, baking powder and flavourings to a paste. The paste was chilled and then molded into portions on a baking tray. After baking in an oven at a suitable temperature for a short period of time shortbread cookies were obtained.

Candies

Butter from 4. above, liquid glucose, salt, brown sugar, white sugar, sweetened condensed milk, fondant and flavourings were placed in a pan and stirred over low heat. After gentle boiling to the correct consistency the contents of the pan were poured into a greased tray and allowed to cool. A chewy caramel was obtained. By omitting the Fondant a hard caramel was obtained.

A suitable milkfat is thus obtained which has been used for the manufacture of a wide range of products (including dairy products) which have zero or low levels of cholesterol, (butter, cheeses, cottage cheeses, ice creams, and low cholesterol liquid milks of varying fat content). Where necessary flavour (natural, nature identical or artificial) can be used in the formulation of the products in order to restore the expected flavour of the product which is absent due to the initial treatment of the AMF.

**Claims**

**1.** A method of removing sterols from edible fat and/or oil said method comprising the steps of maintaining the fat and/or oil in a liquid condition, treating the liquid fat and/or oil with an adsorbent or absorbent selected from

(a) a carbon impregnated with a metal salt including zinc sulphate, zinc nitrate, zinc chloride, calcium chloride, manganese nitrate, manganese sulphate, manganese chloride

(b) a carbon impregnated with water soluble or alcohol soluble organic compounds selected from amides and nucleotides;

(c) porous glass, ceramic or plastics

(d) adsorbent materials including aluminas, silicas, zeolites and magnesias which have/ been impregnated with mineral salts and/or selected amides and nucleotides;

the fat and/or oil being treated with the selected adsorbent or absorbent until more than about 50% of sterols in the fat or oil is extracted therefrom.

**2.** A method as claimed in claim 1 wherein said steps are effected as a batch process.

**3.** A method as claimed in claim 1 wherein said steps are effected as a substantially continuous process.

**4.** A method as claimed in claim 3 which includes the step of passing said fat and/or oil through a continuous column having an upstream end near the point of entry of fat and/or oil thereto and a downstream end near the exit end of said column.

**5.** A method as claimed in claim 4 which includes the steps of removing some spent adsorbent or absorbent from the downstream end of said column and adding fresh adsorbent or absorbent to the upstream end of said column.

**6.** A method as claimed in claim 1 which includes the step of using carbon impregnated with a metal salt.

**7.** A method as claimed in claim 1 which includes the step of using urea as said amide.

**8.** A method as claimed in claim 1 which includes the step of using guanysine monophosphate or inosine monophosphate as said nucleotide.

**9.** A method as claimed in any one of the preceding claims including the step of maintaining the temperature of the fat and/or oil at a temperature sufficient to reduce the viscosity of said liquid fat or oil to a value which facilitates absorption or adsorption of the sterols on to or into the active absorbent or adsorbent.

**10.** A method as claimed in any one of the preceding claims including the step of adding one or more compatible solvents to said fat and/or oil to maintain said fat and/or oil in liquid condition.

**11.** A method as claimed in any one of the preceding claims including the step of using fractionation to separate a liquid fat fraction from a solid fat liquid mixtures.

**12.** A method as claimed in any one of the preceding claims wherein the Freundlich constant K is about 63.

**13.** A method as claimed in any one of the preceding claims wherein the sterol compound removed is cholesterol or its derivatives.

**14.** A method as claimed in claim 12 or 13 wherein the said fat or oil is milkfat.

**Patentansprüche**

**1.** Verfahren zur Entfernung von Sterolen aus eßbarem Fett und/oder Öl, wobei besagtes Verfahren die Schritte umfaßt, daß das Fett und/oder Öl in einem flüssigen Zustand gehalten wird, das flüssige Fett und/oder Öl mit einem Adsorptionsmittel oder Absorptionsmittel behandelt wird, das ausgewählt ist aus

(a) einer Kohle, imprägniert mit einem Metallsalz, einschließlich Zinksulfat, Zinknitrat, Zinkchlorid, Calciumchlorid, Mangannitrat, Mangansulfat, Manganchlorid;

(b) einer Kohle, imprägniert mit wasserlöslichen oder alkohollöslichen organischen Verbindungen, ausgewählt aus Amiden und Nukleotiden;

(c) porösem Glas, Keramik oder Kunststoff;

(d) Adsorptionsmaterialien, einschließlich Aluminiumoxiden, Siliziumdioxiden, Zeolithen und Magnesiumoxiden, die mit Mineralsalzen und/oder ausgewählten Amiden und Nukleotiden imprägniert worden sind;

wobei das Fett und/oder Öl mit dem ausgewählten Adsorptionsmittel oder Absorptionsmittel behandelt wird, bis mehr als etwa 50 % Sterole im Fett oder Öl daraus extrahiert sind.

**2.** Verfahren nach Anspruch 1, wobei besagte Schritte als ein diskontinuierliches Verfahren durchgeführt werden.

**3.** Verfahren nach Anspruch 1, wobei besagte Schritte als ein im wesentlichen kontinuierliches Verfahren durchgeführt werden.

**4.** Verfahren nach Anspruch 3, welches den Schritt einschließt, daß besagtes Fett und/oder Öl durch eine kontinuierliche Säule geleitet wird, die ein stromaufwärtiges Ende nahe dem Eintrittspunkt von Fett und/oder öl dorthinein und ein stromabwärtiges Ende nahe dem Austrittsende besagter Säule besitzt.

**5.** Verfahren nach Anspruch 4, welches die Schritte einschließt, daß ein Teil des verbrauchten Adsorptionsmittels oder Absorptionsmittels vom stromabwärtigen Ende besagter Säule entnommen und frisches Adsorptionsmittel oder Absorptionsmittel zum stromaufwärtigen Ende besagter Säule zugegeben wird.

**6.** Verfahren nach Anspruch 1, welches den Schritt einschließt, daß mit einem Metallsalz imprägnierte Kohle verwendet wird.

**7.** Verfahren nach Anspruch 1, welches den Schritt einschließt, daß Harnstoff als besagtes Amid verwendet wird.

**8.** Verfahren nach Anspruch 1, welches den Schritt einschließt, daß Guanysinmonophosphat oder Inosinmonophosphat als besagtes Nukleotid verwendet wird.

**9.** Verfahren nach einem der vorangehenden Ansprüche, einschließlich des Schrittes, daß die Temperatur des Fettes und/oder Öls bei einer Temperatur gehalten wird, die ausreicht, um die Viskosität besagten flüssigen Fettes oder Öls auf einen Wert zu verringern, der Absorption oder Adsorption der Sterole auf oder in das aktive Absorptionsmittel oder Adsorptionsmittel erleichtert.

**10.** Verfahren nach einem der vorangehenden Ansprüche, einschließlich des Schrittes, daß ein oder mehrere kompatible Lösungsmittel zu besagten Fett und/oder Öl zugegeben werden, um besagtes Fett und/oder Öl in flüssigem Zustand zu halten.

**11.** Verfahren nach einem der vorangehenden Ansprüche, einschließlich des Schrittes, daß Fraktionierung verwendet wird, um eine flüssige Fettfraktion von einer Festfettflüssigkeitsmischung zu trennen.

**12.** Verfahren nach einem der vorangehenden Ansprüche, wobei die Freundlich-Konstante K etwa 63 ist.

**13.** Verfahren nach einen der vorangehenden Ansprüche, wobei die entfernte Sterolverbindung Cholesterin oder seine Derivate ist.

**14.** Verfahren nach Anspruch 12 oder 13, wobei besagtes Fett oder Öl Milchfett ist.

**Revendications**

**1.** Procédé pour éliminer les stérols de graisse et/ou huile comestible, ledit procédé comprenant les étapes consistant à maintenir la graisse et/ou huile en un état liquide, traiter la graisse et/ou huile liquide avec un adsorbant ou absorbant choisi parmi

(a) un charbon imprégné d'un sel métallique comprenant le sulfate de zinc, le nitrate de zinc, le chlorure de zinc, le chlorure de calcium, le nitrate de manganèse, le sulfate de manganèse, le chlorure de manganèse ;

(b) un charbon imprégné de composés organiques solubles dans l'eau ou solubles dans un alcool choisis parmi les amides et les nucléotides ;

(c) un verre poreux, une matière céramique poreuse ou une matière plastique poreuse ;

(d) d'autres matières adsorbantes comprenant des alumines, silices, zéolites et magnésies, qui ont été imprégnées avec des sels minéraux et/ou des amides et nucléotides choisis ;

la graisse et/ou huile était traitée par l'adsorbant ou absorbant choisi jusqu'à ce que plus d'environ 50 % des stérols contenus dans la graisse ou huile en soient extraits.

**2.** Procédé tel que revendiqué dans la revendication 1, dans lequel lesdites étapes sont effectuées sous forme d'un procédé discontinu.

**3.** Procédé tel que revendiqué dans la revendication 1, dans lequel lesdites étapes sont effectuées sous forme d'un procédé sensiblement continu.

**4.** Procédé tel que revendiqué dans la revendication 3, qui comprend l'étape consistant à faire passer ladite graisse et/ou huile à travers une colonne continue ayant une extrémité amont à proximité du point d'entrée de la graisse et/ou huile dans la colonne et une extrémité aval à proximité de l'extrémité de sortie de ladite colonne.

**5.** Procédé tel que revendiqué dans la revendication 4, qui comprend les étapes consistant à enlever une partie de l'adsorbant ou absorbant usé de l'extrémité aval de ladite colonne et à ajouter de l'adsorbant ou absorbant neuf à l'extrémité amont de ladite colonne.

**6.** Procédé tel que revendiqué dans la revendication 1, qui comprend l'étape consistant à utiliser du charbon imprégné d'un sel métallique.

**7.** Procédé tel que revendiqué dans la revendication 1, qui comprend l'étape consistant à utiliser de l'urée à titre dudit amide.

**8.** Procédé tel que revendiqué dans la revendication 1 qui comprend l'étape consistant à utiliser du monophosphate de guanosine ou du monophosphate d'inosine.

**9.** Procédé tel que revendiqué dans l'une quelconque des revendications précédentes, comprenant l'étape consistant à maintenir la température de la graisse et/ou huile à une température suffisante pour réduire la viscosité de ladite graisse ou huile liquide à une valeur qui facilite l'absorption ou adsorption des stérols sur ou dans l'absorbant ou adsorbant actif.

**10.** Procédé tel que revendiqué dans l'une quelconque des revendications précédentes, comprenant l'étape consistant à ajouter un ou plusieurs solvants compatibles à ladite graisse et/ou huile pour maintenir ladite graisse et/ou huile à l'état liquide.

**11.** Procédé tel que revendiqué dans l'une quelconque des revendications précédentes, comprenant l'étape consistant à utiliser un fractionnement pour séparer une fraction grasse liquide de mélanges de fractions grasses solide et liquide.

**12.** Procédé tel que revendiqué dans l'une quelconque des revendications précédentes, dans lequel la constante K de Freundlich est d'environ 63.

**13.** Procédé tel que revendiqué dans l'une quelconque des revendications précédentes, dans lequel le stérol éliminé est le cholestérol ou ses dérivés.

**14.** Procédé tel que revendiqué dans la revendication 12 ou 13, dans lequel ladite graisse ou huile est la matière grasse du lait.